# EUROPEAN PATENT APPLICATION

(11) **EP 3 885 708 A1**
(43) Date of publication of application: **29.09.2021**
(21) Application number: 21165256.5
(22) Date of filing: 26.03.2021
(51) Int. Cl.: G01C 23/00, G08G 5/00

(54) **SYSTEM AND METHOD TO CHANGE MAP FORMAT AND RANGE FOR AIRCRAFT**

(30) Priority: 26.03.2020 US 202063000072 P; 03.03.2021 US 202117190700
(71) Applicant: Rockwell Collins, Inc., Cedar Rapids, IA 52498 (US)
(72) Inventor: DAVIS, Jason, Marengo, IA Iowa 52301 (US)
(74) Representative: Dehns

(57) **Abstract**

A system includes a display (402) and a processor (404). The processor is configured to: output a first view of a first moving map (102, 106) having a first map range; determine that a phase of flight has changed or is expected to change; and based at least on the determination that the phase of flight has changed or is expected to change, switch the first view of the first moving map having the first map range to a second view of a second moving map having a second map range. The display is configured to: display the first view of the first moving map having the first map range; and display the second view of the second moving map having the second map range based at least on the determination that the phase of flight has changed or is expected to change.

## Description

### CROSS-REFERENCE TO RELATED APPLICATIONS

The present application is related to and claims priority from: United States Application Serial Number 63/000,072, titled SYSTEM AND METHOD TO CHANGE MAP FORMAT AND RANGE FOR AIRCRAFT, filed March 26, 2020.

### BACKGROUND

Currently, flight crew spend significant amounts of time changing map formats and map ranges during flight phase transitions, which can detract from the flight crew's ability to perform other flight tasks.

### SUMMARY

In one aspect, embodiments of the inventive concepts disclosed herein are directed to a system. The system includes a display and a processor communicatively coupled to the display. The processor is configured to: output, to the display, a first view of a first moving map having a first map range, the first moving map depicting a location of an aircraft; determine that a phase of flight has changed or is expected to change; and based at least on the determination that the phase of flight has changed or is expected to change, switch the first view of the first moving map having the first map range to a second view of a second moving map having a second map range, the second moving map depicting the location of the aircraft. The display is configured to: display the first view of the first moving map having the first map range; and display the second view of the second moving map having the second map range based at least on the determination that the phase of flight has changed or is expected to change.

In a further aspect, embodiments of the inventive concepts disclosed herein are directed to a method. The method includes: outputting, by at least one processor and to at least one display, a first view of a first moving map having a first map range, the first moving map depicting a location of an aircraft; determining, by the at least one processor, that a phase of flight has changed or is expected to change; based at least on the determination that the phase of flight has changed or is expected to change, switching, by the at least one processor, the first view of the first moving map having the first map range to a second view of a second moving map having a second map range, the second moving map depicting the location of the aircraft; displaying, by the at least one display, the first view of the first moving map having the first map range; and displaying, by the at least one display, the second view of the second moving map having the second map range based at least on the determination that the phase of flight has changed or is expected to change.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a multi-function window (MFW) moving map according to the inventive concepts disclosed herein.
FIG. 2 is a view of an exemplary embodiment of an airport moving map (AMM) according to the inventive concepts disclosed herein.
FIG. 3 is a view of an exemplary embodiment of a system including an aircraft according to the inventive concepts disclosed herein.
FIG. 4 is a view of an exemplary embodiment of the display unit computing device of FIG. 3 according to the inventive concepts disclosed herein.
FIG. 5 is a view of an exemplary embodiment of a computing device of FIG. 3 according to the inventive concepts disclosed herein.
FIG. 6 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a system and a method configured to, based at least on a determination that a phase of flight has changed or is expected to change, switch a first view of a first moving map having a first map range to a second view of a second moving map having a second map range.

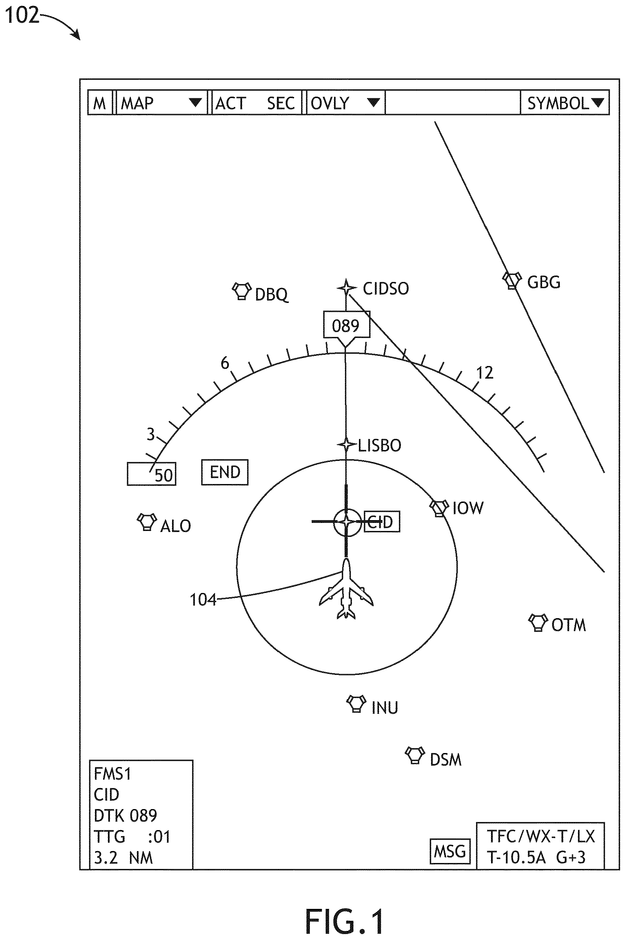

Referring now to FIG. 1, an exemplary embodiment of a multi-function window (MFW) moving map 102 according to the inventive concepts disclosed herein is depicted. The MFW moving map 102 may include a depiction of an aircraft 104. The MFW moving map 102 may allow for a variety of map ranges (e.g., the higher the map range, the more zoomed out the map is) to be used for operations at different phases of flight. Often, flight crews use MFW map ranges (e.g., of 2 nautical miles (NM) or greater) for in-air flight phases.

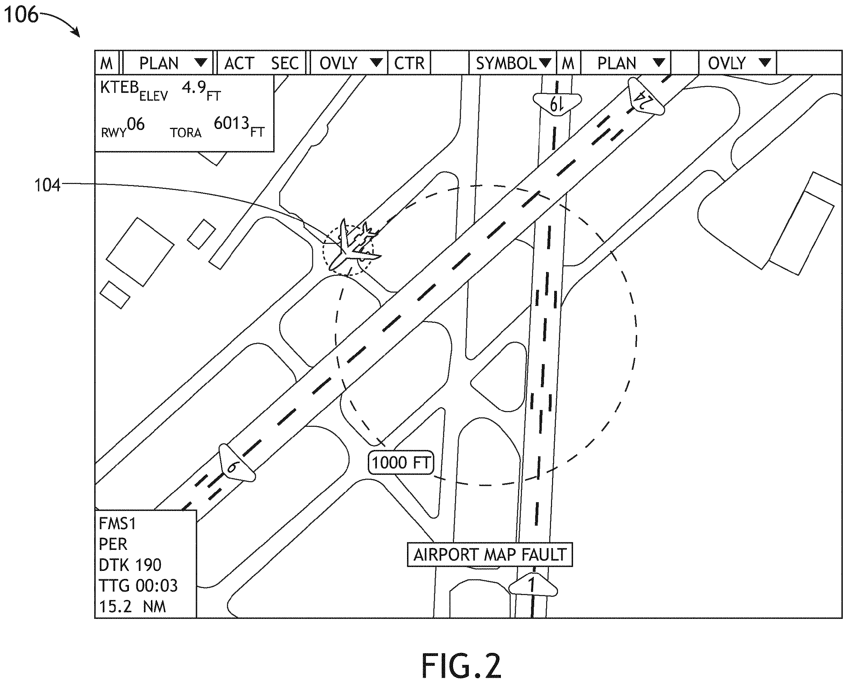

Referring now to FIG. 2, an exemplary embodiment of an airport moving map (AMM) 106 according to the inventive concepts disclosed herein is depicted. The AMM 106 may include a depiction of an aircraft 104. The AMM 106 may utilize a MFW map window to provide a more detailed view of airport map data (e.g., at ranges below 2 NM). Often, flight crews will utilize the AMM 106 map ranges (e.g., less than 2 NM) to provide a detailed representation of an airport during ground operations.

In some embodiments, in the event the flight crew needs to execute a go around, which is a high-workload situation, the map format (e.g., a MFW moving map 102 or an AMM 106) and map range may be automatically changed to suit a transition of phase of flight. This automated change may be especially useful if the AMM 106 format and range (e.g., less than 2 NM) has already been selected manually or selected by the system. Some embodiments utilize an automated trigger (e.g., based on aircraft position and/or configuration) to change the map format and map range for a next phase of flight. Operationally, it is often considered to be a best practice for the crew to clean up the aircraft after initiating a go around (e.g., gear up and flaps/slats retracted, etc.). Based on this use case, the map format and map range may be changed to the MFW moving map 102 (e.g., 20 NM or greater) (similar to takeoff map format and map range) when the displays have received any combination of suitable sensor input identifying the gear is retracted, flaps/slats are retracted, and/or takeoff/go-around (TOGA) command was selected. In some embodiments, changing the map format and map range after initiating a go around may include: using a flight plan and making the map format and map range change once the aircraft 104 has set a holding pattern as a next waypoint; using a change in altitude (e.g., radio altitude and/or barometric altitude) from decreasing to increasing; and/or using an establishment of a positive climb rate after having a descent rate immediately prior to the positive climb rate.

Currently, if the flight crew needs to change from map format and map ranges used for in-air operations (e.g., 2 NM or greater) to AMM format and map range more suitable for ground operations (e.g., less than 2 NM), the change currently requires manual adjustment of the map during a high-workload phase of flight (e.g., approach, landing, or rollout). Some embodiments may use an automated trigger (e.g., based on aircraft position and/or configuration) to automatically change the map format and map range for a next phase of flight. The map format and map range change can occur while the aircraft 104 is on final approach or after touchdown and on rollout, which can be determined in a number of ways using a variety of inputs including any or all of the following: weight on wheels, gear position, flaps/slats position, radio altitude, barometric altitude, ground speed, etc. For example, for a change while on final approach involving an expected change to a phase of flight, operationally, it is often considered to be a best practice for the crew to have the gear down and full flaps/slats at 1000 ft. above runway height. Based on this use case, the map format and map range may automatically change to AMM 106 format and map range once the displays have received sensor input identifying that the gear is down and locked and the flaps/slats are at full extension. Final approach can be defined in a number of ways using a variety of inputs including any or all of the following: weight on wheels, gear position, flaps/slats position, radio altitude, barometric altitude, throttle lever angle (TLA), etc. Further, for example, for a change while on final approach involving an expected change to a phase of flight, the map format and map range may automatically change to AMM 106 format and map range by using any or all of the following: information associated with a flight plan and making the change only after the aircraft has sequenced a last waypoint, or information associated with a flight plan and making the change when the aircraft is 3 NM or less away from a destination runway endpoint. For example, for a change after touchdown, the system can also be configured to operate reactively in which the AMM 106 format and map range is selected after touchdown. Based on this use case, the map should change to the AMM 106 format and map range once the displays have received sensor input identifying the gear is down and locked, flaps/slats are at full extension, and/or weight on wheels is true (e.g., detected). Further, for example, for a change after touchdown, the system can also be configured to operate reactively in which the AMM 106 format and map range is selected after touchdown by using any or all of the following: information related to throttles engaged in reverse, information related to application of wheel brakes, and/or ground speed decreasing to some predetermined limit (e.g., 35 knots to coincide with other existing system limits).

Currently, if the flight crew needs to change a map from AMM format and map range (e.g., less than 2 NM) to a map format and map range more suitable for in-air operations, a manual adjustment of the map range to an often-used range selection such as 20 NM (or some other pre-determined range) is needed. This problem is further complicated when factoring in the presence or absence of automatic dependent surveillance-broadcast (ADS-B) data on the AMM 106, which may show area traffic. If ADS-B data is not presented on the AMM 106, it may be desirable for the map range to be changed to 20 NM prior to takeoff. However, if ADS-B data is presented on the AMM, it may be desirable for the map range to be changed after departing the runway. Some embodiments may use an automated trigger (e.g., based on aircraft position and/or configuration) to change the map format and map range for a next phase of flight. In some embodiments, with ADS-B absent from the AMM 106, the map format and map range may be changed prior to takeoff. This format and map range change can be executed upon arrival at a departure runway using airport runway database data (if available) or information related to exclusion zones. In some embodiments, with ADS-B present on the AMM 106, the map format and map range may be changed after takeoff. "Takeoff can be determined in a number of ways using a variety of inputs including any or all of the following: weight on wheels, gear position, flaps/slats position, radio altitude, barometric altitude, etc. Operationally, it may be desirable to clean up the aircraft (e.g., raise the gear and retract flaps/slats) as soon as a positive climb rate is established, which often takes place while the aircraft is still over the runway. Based on the operational use case, the map may change from AMM format and map range to 20 NM once the displays have received sensor input identifying the landing gear is retracted and the flaps/slats are fully retracted. Further, for example, this changing of the map format and map range when the aircraft is clean (as stated above) combined with an altitude above the ground of 400 feet (or other pre-determined altitude) may be based on an altitude input (e.g., from a radio altimeter or a barometric altimeter).

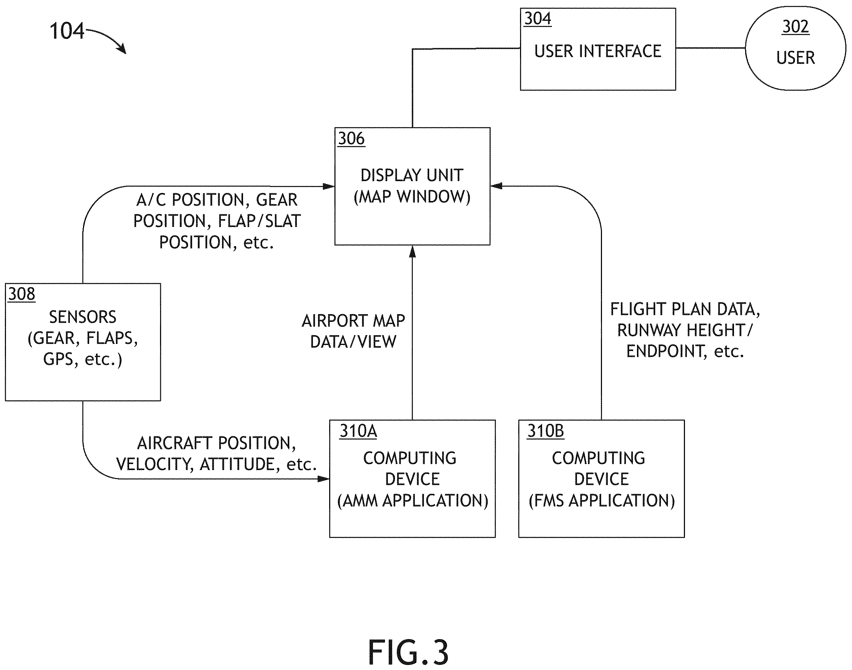

Referring now to FIGS. 3, 4 and 5, an exemplary embodiment of a system according to the inventive concepts disclosed herein is depicted. In some embodiments, the system may include the aircraft 104, which may include at least one user 302, at least one user interface 304, at least one display unit computing device 306, sensors 308, at least one computing device 310A, and/or at least one computing device 310B, some or all of which may be communicatively coupled at any given time. In some embodiments, the at least one display unit computing device 306, the at least one computing device 310A, and/or the at least one computing device 310B may be implemented as a single computing device or any number of computing devices configured to perform any or all of the operations disclosed throughout.

The user 302 may be a pilot or crew member. The user 302 may be configured to interface with the system via the user interface 304, for example, to cause a change in a phase of flight (e.g., to cause a change in an approach to a go around). The at least one user interface 304 may be implemented as any suitable user interface, such as a touchscreen (e.g., of the display unit computing device 306 and/or another display unit), a multipurpose control panel, a cursor control panel, a keyboard, a mouse, a trackpad, a button, a switch, an eye tracking system, and/or a voice recognition system. The user interface 304 may be configured to receive a user selection and to output the user selection to a computing device (e.g., the display unit computing device 306).

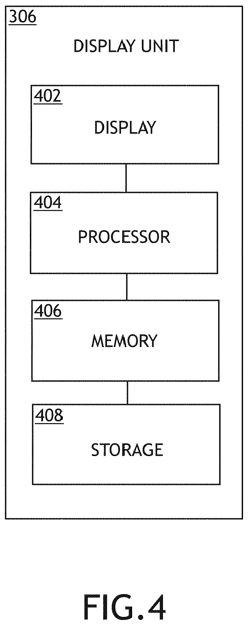

The display unit computing device 306 may be implemented as any suitable computing device, such as an MFW computing device. As shown in FIG. 4, the display unit computing device 306 may include at least one display 402, at least one processor 404, at least one memory 406, and/or storage 408, some or all of which may be communicatively coupled at any given time. The processor 404 may be configured to run various software applications (e.g., a map window application) or computer code stored (e.g., maintained) in a non-transitory computer-readable medium (e.g., memory 406 and/or storage 408) and configured to execute various instructions or operations. The processor 404 may be configured to perform any or all of the operations disclosed throughout. For example, the processor 404 may be configured to: receive sensor data from the sensors 308; execute the map window application; generate data and views of a multifunction window (MFW) moving map 102; and/or output the views of the MFW moving map 102 to the display 402. The display 402 may be configured to: display a first view of a first moving map (e.g., one of an AMM 106 or a MFW moving map 102) having a first map range; and display a second view of a second moving map (e.g., the other of the AMM 106 or the MFW moving map 102) having a second map range based at least on a determination that a phase of flight has changed or is expected to change. For example, in some embodiments, the first moving map is an airport moving map (AMM) 106, and the second moving map is a multifunction window (MFW) moving map 102, wherein the first map range is less than the second map range. For example, in some embodiments, the first moving map is a multifunction window (MFW) moving map 102, and the second moving map is an airport moving map (AMM) 106, wherein the first map range is greater than the second map range.

The sensors 308 may be any suitable sensors configured to output sensor data to another computing device (e.g., 306, 310A, and/or 310B). For example, the sensors 308 may include any or all of the following: at least one global positioning system (GPS) sensor; at least one inertial reference system (IRS) sensor; at least one weight-on-wheels sensor (e.g., configured to detect a current state or an established change from weight off wheels to weight on wheels, or vice versa); at least one landing gear position sensor; at least one flap and/or slat position sensor; at least one altimeter (e.g., at least one radio altimeter and/or at least one barometric altimeter); at least one throttle position sensor; at least one aircraft position sensor; at least one groundspeed sensor; at least one airspeed sensor; and/or any other sensors commonly installed in aircraft. The sensors 308 may be configured to output sensor data (e.g., aircraft position, velocity, and/or attitude) to some or all of the computing devices (e.g., 306, 310A, and/or 310B).

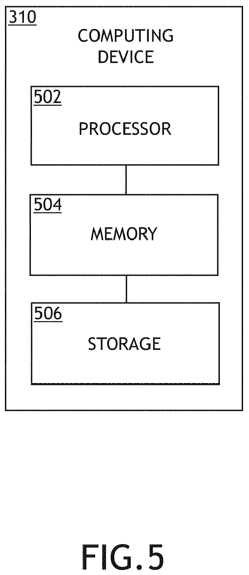

The computing device 310A may be implemented as any suitable computing device, such as an AMM computing device. As shown in FIG. 5, the computing device 310A may include the elements of the computing device 310 and may include at least one processor 502, at least one memory 504, and/or storage 506, some or all of which may be communicatively coupled at any given time. The processor 502 may be configured to run various software applications (e.g., an AMM application) or computer code stored (e.g., maintained) in a non-transitory computer-readable medium (e.g., memory 504 and/or storage 506) and configured to execute various instructions or operations. The processor 502 of the computing device 310A may be configured to perform any or all of the operations disclosed throughout. For example, the processor 502 of the computing device 310A may be configured to: receive sensor data from the sensors 308; execute the AMM application; generate data and views of an AMM 106; and/or output the views of the AMM 106 to the display unit computing device 306.

The computing device 310B may be implemented as any suitable computing device, such as a flight management system (FMS) computing device. As shown in FIG. 5, the computing device 310B may include the elements of the computing device 310 and may include at least one processor 502, at least one memory 504, and/or storage 506, some or all of which may be communicatively coupled at any given time. The processor 502 may be configured to run various software applications (e.g., an FMS application) or computer code stored (e.g., maintained) in a non-transitory computer-readable medium (e.g., memory 504 and/or storage 506) and configured to execute various instructions or operations. The processor 502 of the computing device 310B may be configured to perform any or all of the operations disclosed throughout. For example, the processor 502 of the computing device 310B may be configured to output flight plan data, such as runway height, runway endpoint, current waypoint data, next waypoint data, last waypoint data, and/or the like.

For example, at least one processor (e.g., the at least one processor 404, the at least one processor 502 of the computing device 310A, and/or the at least one processor 502 of the computing device 310B) may be configured to perform (e.g., collectively perform, if more than one processor) any or all of the operations disclosed throughout.

For example, the at least one processor (e.g., the at least one processor 404, the at least one processor 502 of the computing device 310A, and/or the at least one processor 502 of the computing device 310B) may be configured to: output, to the at least one display, a first view of a first moving map having a first map range, the first moving map depicting a location of an aircraft; determine that a phase of flight has changed or is expected to change; and/or based at least on the determination that the phase of flight has changed or is expected to change, switch the first view of the first moving map having the first map range to a second view of a second moving map having a second map range, the second moving map depicting the location of the aircraft.

In some embodiments, wherein the first moving map is an airport moving map (AMM), wherein the second moving map is a multifunction window (MFW) moving map, wherein the first map range is less than the second map range, the at least one processor (e.g., the at least one processor 404, the at least one processor 502 of the computing device 310A, and/or the at least one processor 502 of the computing device 310B) may be configured to: determine that the phase of flight has changed or is expected to change from an approach phase of flight to a go around phase of flight. In some embodiments, the at least one processor (e.g., the at least one processor 404, the at least one processor 502 of the computing device 310A, and/or the at least one processor 502 of the computing device 310B) may be configured to: determine that the phase of flight has changed from the approach phase of flight to the go around phase of flight. For example, the determination that the phase of flight has changed or is expected to change from an approach phase of flight to the go around phase of flight may be based on any or all of the following occurrences: weight on wheels goes from false to true to false within in a given time span; landing gear goes from up to down to up in a given time span; flaps/slats go from zero to deployed to zero in a given time span; radio altitude is decreasing until it reaches zero (or any other predetermined threshold altitude) and then increases in a given time span; barometric altitude is decreasing until it reaches runway altitude (or any other predetermined threshold altitude) and then increases in a given time span; throttle position goes from idle to full in a given time after touch down (or when go around is selected on throttle control); position changes from getting closer to arrival airport to getting farther away (e.g., may be based on flight plan waypoint sequencing); speed (air and/or ground) changes from decreasing to increasing; and/or brakes not applied some given time after touch down (e.g., if weight on wheels becomes true).

In some embodiments, wherein the first moving map is an airport moving map (AMM), wherein the second moving map is a multifunction window (MFW) moving map, wherein the first map range is less than the second map range, the at least one processor (e.g., the at least one processor 404, the at least one processor 502 of the computing device 310A, and/or the at least one processor 502 of the computing device 310B) may be configured to: determine that the phase of flight has changed or is expected to change from a taxi phase of flight to a takeoff phase of flight. For example, the at least one processor (e.g., the at least one processor 404, the at least one processor 502 of the computing device 310A, and/or the at least one processor 502 of the computing device 310B) may be configured to: determine that the phase of flight has changed from the taxi phase of flight to the takeoff phase of flight, wherein the AMM depicts information obtained from automatic dependent surveillance-broadcast (ADS-B) data. For example, the determination that the phase of flight has changed or is expected to change from the taxi phase of flight to the takeoff phase of flight may be based on any or all of the following occurrences: entering an exclusion zone (e.g., a predetermined area on the ground from where a takeoff is possible) on the ground; weight on wheels goes from true to false; landing gear goes from down and locked to up; flaps/slats go from deployed to zero in a given time; radio altitude is continually increasing; barometric altitude is increasing; throttle goes to full and/or remains at some angle above idle; position changes such that aircraft is going away from departure airport (e.g., may be based on flight plan waypoint sequencing); and/or speed (air and/or ground) increase and remain above a threshold for given time.

In some embodiments, wherein the first moving map is a multifunction window (MFW) moving map, wherein the second moving map is an airport moving map (AMM), wherein the first map range is greater than the second map range, the at least one processor (e.g., the at least one processor 404, the at least one processor 502 of the computing device 310A, and/or the at least one processor 502 of the computing device 310B) may be configured to: determine that the phase of flight has changed or is expected to change from an approach phase of flight to a taxi phase of flight. In some embodiments, the at least one processor (e.g., the at least one processor 404, the at least one processor 502 of the computing device 310A, and/or the at least one processor 502 of the computing device 310B) may be configured to: determine, prior to touchdown, that the phase of flight is expected to change from the approach phase of flight to the taxi phase of flight. In some embodiments, the at least one processor (e.g., the at least one processor 404, the at least one processor 502 of the computing device 310A, and/or the at least one processor 502 of the computing device 310B) may be configured to: determine, after touchdown, that the phase of flight has changed from the approach phase of flight to the taxi phase of flight. For example, the determination that the phase of flight has changed or is expected to change from the approach phase of flight to the taxi phase of flight may be based on any or all of the following occurrences: weight on wheels goes from false to staying true; landing gear goes from up position to down and locked for a given time; flaps/slats go from zero to deployed for a given time; radio altitude is continually decreasing and remains constant at zero after touch down for a given time; barometric altitude decreases until runway altitude is reached and then remains constant for a given time; throttle goes from idle to full reverse; position changes from getting closer to arrival airport to staying within airport boundaries (or within proximity) (e.g., may be based on flight plan waypoint sequencing); speed (air and/or ground) continues and remains below a given threshold for a given time; and/or brakes applied some given time after touch down.

For example, the at least one processor (e.g., the at least one processor 404, the at least one processor 502 of the computing device 310A, and/or the at least one processor 502 of the computing device 310B) may be configured to: determine that the phase of flight has changed or is expected to change based at least on the sensor data. In some embodiments, the sensor data may include information of at least one of the following: weight-on-wheels, a landing gear position, a position of a flap, a position of a slat, an altitude, a throttle position, a groundspeed, an airspeed, a brake state, or an aircraft position.

For example, the at least one processor (e.g., the at least one processor 404, the at least one processor 502 of the computing device 310A, and/or the at least one processor 502 of the computing device 310B) may be configured to: determine that the phase of flight has changed or is expected to change based at least on a user input received from the user interface system 304.

For example, the at least one processor (e.g., the at least one processor 404, the at least one processor 502 of the computing device 310A, and/or the at least one processor 502 of the computing device 310B) may be configured to: determine that the phase of flight has changed or is expected to change based at least on flight plan data.

For example, the at least one processor (e.g., the at least one processor 404, the at least one processor 502 of the computing device 310A, and/or the at least one processor 502 of the computing device 310B) may be configured to: determine that the phase of flight has changed or is expected to change based at least on flight plan data and at least one of: an occurrence of a holding pattern set to a next waypoint, an occurrence of a sequencing of a last waypoint, or an occurrence of the aircraft being within a predetermined distance of a destination runway endpoint.

In some embodiments, for takeoff, the map format and range may have been already selected for an upcoming phase of flight (either manually or automatically). In the event of a rejected takeoff, the aircraft 104 would not leave the ground and instead may exit the runway and return to the hangar, gate, or maintenance area. A rejected takeoff may be determined by any or all of the following: entering and subsequently exiting a flight plan runway without having ever left the ground, throttles increased to a "takeoff thrust" setting and subsequently returned to idle (either while on a flight plan runway or independent of flight plan), flaps/slats being deployed and subsequently stowed without having ever left the ground, and/or engine speed (e.g., different from throttle). In such embodiments, determining that a phase of flight has changed or is expected to change may include determining that a rejected takeoff has occurred.

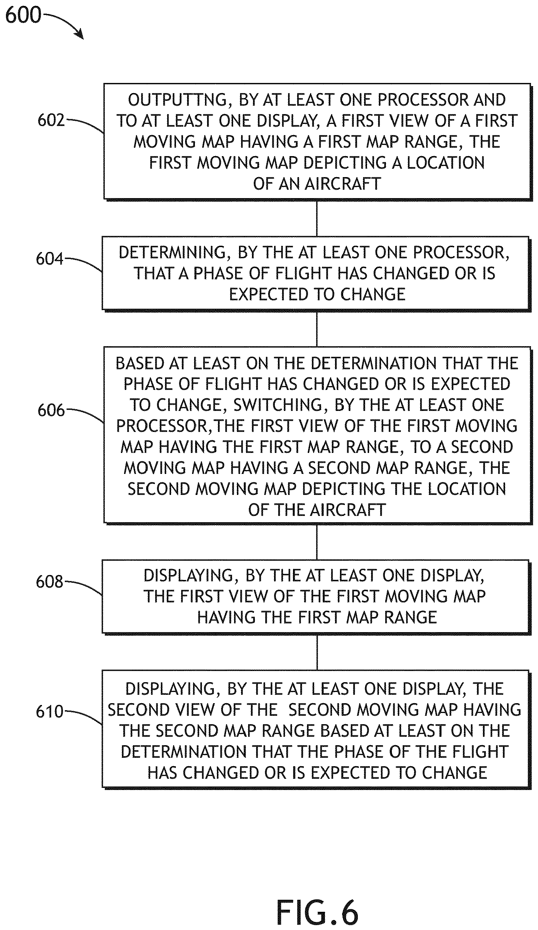

Referring now to FIG. 6, an exemplary embodiment of a method 600 according to the inventive concepts disclosed herein may include one or more of the following steps. Additionally, for example, some embodiments may include performing one or more instances of the method 600 iteratively, concurrently, and/or sequentially. Additionally, for example, at least some of the steps of the method 600 may be performed in parallel and/or concurrently. Additionally, in some embodiments, at least some of the steps of the method 600 may be performed non-sequentially.

A step 602 may include outputting, by at least one processor and to at least one display, a first view of a first moving map having a first map range, the first moving map depicting a location of an aircraft.

A step 604 may include determining, by the at least one processor, that a phase of flight has changed or is expected to change.

A step 606 may include based at least on the determination that the phase of flight has changed or is expected to change, switching, by the at least one processor, the first view of the first moving map having the first map range to a second view of a second moving map having a second map range, the second moving map depicting the location of the aircraft.

A step 608 may include displaying, by the at least one display, the first view of the first moving map having the first map range.

A step 610 may include displaying, by the at least one display, the second view of the second moving map having the second map range based at least on the determination that the phase of flight has changed or is expected to change.

Further, the method 600 may include any of the operations disclosed throughout.

As will be appreciated from the above, embodiments of the inventive concepts disclosed herein may be directed to a system and a method configured to, based at least on a determination that a phase of flight has changed or is expected to change, switch a first view of a first moving map having a first map range to a second view of a second moving map having a second map range.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are within the scope of the invention as defined by the claims.

## Claims

1. A system, comprising:
at least one display (402); and
at least one processor (404) communicatively coupled to the display, the at least one processor configured to:
output, to the at least one display, a first view of a first moving map (102, 106) having a first map range, the first moving map depicting a location of an aircraft;
determine that a phase of flight has changed or is expected to change; and
based at least on the determination that the phase of flight has changed or is expected to change, switch the first view of the first moving map having the first map range to a second view of a second moving map having a second map range, the second moving map depicting the location of the aircraft;
wherein the at least one display is configured to:
display the first view of the first moving map having the first map range; and
display the second view of the second moving map having the second map range based at least on the determination that the phase of flight has changed or is expected to change.

2. The system of claim 1, wherein the first moving map is an airport moving map, AMM (106), wherein the second moving map is a multifunction window, MFW, (102) moving map, wherein the first map range is less than the second map range.

3. The system of claim 2, wherein the at least one processor (404) is configured to determine that the phase of flight has changed or is expected to change comprises the at least one processor being configured to determine that the phase of flight has changed or is expected to change from an approach phase of flight to a go around phase of flight.

4. The system of claim 3, wherein the at least one processor (404) is configured to determine that the phase of flight has changed or is expected to change comprises the at least one processor being configured to determine that the phase of flight has changed from the approach phase of flight to the go around phase of flight.

5. The system of claim 2, wherein the at least one processor (404) is configured to determine that the phase of flight has changed or is expected to change comprises the at least one processor being configured to determine that the phase of flight has changed or is expected to change from a taxi phase of flight to a takeoff phase of flight.

6. The system of claim 5, wherein the at least one processor (404) is configured to determine that the phase of flight has changed or is expected to change comprises the at least one processor being configured to determine that the phase of flight has changed from the taxi phase of flight to the takeoff phase of flight, wherein the AMM depicts information obtained from automatic dependent surveillance-broadcast, ADS-B, data.

7. The system of claim 1, wherein the first moving map is a multifunction window, MFW, moving map (102), wherein the second moving map is an airport moving map, AMM, (106), wherein the first map range is greater than the second map range, wherein the at least one processor (404) is configured to determine that the phase of flight has changed or is expected to change comprises the at least one processor being configured to determine that the phase of flight has changed or is expected to change from an approach phase of flight to a taxi phase of flight.

8. The system of claim 7, wherein the at least one processor (404) is configured to determine that the phase of flight has changed or is expected to change comprises the at least one processor being configured to determine, prior to touchdown, that the phase of flight is expected to change from the approach phase of flight to the taxi phase of flight.

9. The system of claim 7, wherein the at least one processor (404) is configured to determine that the phase of flight has changed or is expected to change comprises the at least one processor being configured to determine, after touchdown, that the phase of flight has changed from the approach phase of flight to the taxi phase of flight.

10. The system of any preceding claim, further comprising at least one sensor (308) configured to output sensor data to the at least one processor, wherein the at least one processor is configured to determine that the phase of flight has changed or is expected to change based at least on the sensor data.

11. The system of claim 10, wherein the sensor data includes information of at least one of: weight-on-wheels, a landing gear position, a position of a flap, a position of a slat, an altitude, a throttle position, a groundspeed, an airspeed, a brake state, or an aircraft position.

12. The system of claim 11, further comprising at least one user interface (304) configured to output a user input to the at least one processor (404), wherein the at least one processor is configured to determine that the phase of flight has changed or is expected to change based at least on the user input.

13. The system of any preceding claim, wherein the at least one processor (404) is configured to determine that the phase of flight has changed or is expected to change based at least on flight plan data.

14. The system of claim 13, wherein the at least one processor (404) is configured to determine that the phase of flight has changed or is expected to change based at least on flight plan data and at least one of: an occurrence of a holding pattern set to a next waypoint, an occurrence of a sequencing of a last waypoint, or an occurrence of the aircraft being within a predetermined distance of a destination runway endpoint.

15. A method, comprising:
outputting, by at least one processor (404) and to at least one display (402), a first view of a first moving map (102, 106) having a first map range, the first moving map depicting a location of an aircraft;
determining, by the at least one processor, that a phase of flight has changed or is expected to change;
based at least on the determination that the phase of flight has changed or is expected to change, switching, by the at least one processor, the first view of the first moving map having the first map range to a second view of a second moving map having a second map range, the second moving map depicting the location of the aircraft;
displaying, by the at least one display, the first view of the first moving map having the first map range; and
displaying, by the at least one display, the second view of the second moving map having the second map range based at least on the determination that the phase of flight has changed or is expected to change.
